# EUROPÄISCHE PATENTSCHRIFT

(11) **EP 0 886 447 B1**
(45) Veröffentlichungstag und Bekanntmachung des Hinweises auf die Patenterteilung: **16.03.2005**
(21) Anmeldenummer: 98111084.4
(22) Anmeldetag: 17.06.1998
(51) Int. Cl.: H04Q 3/00, H04Q 3/47

(54) **Verfahren und Einrichtung zur Weglenkung von Signalen in digitalen Telekommunikationssystemen**
Method and device for routing signals in digital telecommunication systems
Procédé et dispositif pour le routage de signaux dans des systèmes de télécommunications numériques

(30) Priorität: 18.06.1997 DE 19725791
(43) Veröffentlichungstag der Anmeldung: 23.12.1998
(73) Patentinhaber: T-Mobile Deutschland GmbH, 53227 Bonn (DE); Deutsche Telekom AG, 53113 Bonn (DE)
(72) Erfinder: Gottschalk, Hubertus, 64560 Riedstadt (DE); Ljungström, Patrik, 53639 Königswinter (DE)
(74) Vertreter: Riebling, Peter, Dr.-Ing.

(56) Entgegenhaltungen:
- EP-A- 0 550 179
- EP-A- 0 649 265
- DE-A- 19 515 856
- US-A- 5 239 577
- US-A- 5 610 910

## Beschreibung

Die Erfindung betrifft ein Verfahren und eine Einrichtung zur Weglenkung von Signalen in digitalen Telekommunikationssystemen, d.h. beispielsweise in digitalen Mobilfunknetzen, Festnetzen, Satellitenkommunikationssystemen etc.

Bei Verbindungwünschen ausgehend von analogen Telekommunikationsendgeräten ist eine Diensteerkennurig, d.h. eine Erkennung der Art der übertragenen Signale (Sprache, Telefax, Datendienst etc.), nur anhand einer sogenannten Inband-Signalisierung möglich, d.h. anhand einer zusammen mit dem Nutzsignal übertragenen Signalisierung zur Kennzeichnung des Dienstes.

In digitalen Telekommunikationsnetzen führt dies dazu, daß normalerweise jedem Teilnehmer jeweils eine Rufnummer pro Dienst zugeteilt werden muß. Dies ist insbesondere in digitalen Mobilfunknetzen notwendig, da dort bei Datendiensten, die von analogen Telekommunikationsendgeräten herrühren, die Interworkingfunktion (Modemfunktion) vor Durchschaltung des Verbindungswunsches in der Zielvermittlungsstelle eingeschleift und konfiguriert werden muß.

In US-A-5 610 910 ist ein Verfahren zur diensteabhängigen Zugriffssteuerung zu Telekommunikationsnetzen offenbart.

Bei einem Verbindungsaufbau wird anhand von Informationen in den Verkehrssignalen der angeforderte Dienst, z.B. Modemverbindung, Sprachverbindung, erkannt und der Verbindungsaufbau über entsprechend für diesen Dienst günstige Telekommunikationsnetze geroutet. Das Einfügen und Weiterleiten von speziellen Informationen über die Art des Dienstes ist hierbei nicht vorgesehen.

Aufgabe der vorliegenden Erfindung ist es, ein Verfahren und eine Einrichtung zur Weglenkung von Signalen in digitalen Telekommunikationsnetzen anzugeben, durch welches spezielle Rufnummern je Datendienst vermieden werden können.

Gelöst wird diese Aufgabe durch die kennzeichnenden Merkmale des Patentanspruchs 1 bzw. des Patentanspruchs 3.

Das erfindungsgemäße Verfahren zeichnet sich dadurch aus, daß in die der Übergangs-Vermittlungsstelle zugehenden Nutzkanal-Leitungen eine Funktion implementiert wird, die den Nutzkanal auf die Übertragung von Inband-Dienstesignalisierungen, wie z.B. Handshake-Signalen, 2100Hz Tonsignal, DTMF abhorcht. Wenn eine entsprechende Inband-Signalisierung erkannt wird, wird in der regulären Abfrage zum intelligenten Dienstekontrollpunkt (SCP/HLR) eine Information zur Kennzeichnung eines analogen Datendienstes eingefügt und übertragen.
Eine Abfrage des Dienstekontrollpunktes beim Rufaufbau wird zum Beispiel bei speziell geschaltete Rufnummern (0130-Rufnummern) durchgeführt oder bei GSM-Mobilfunk zur Abfrage des Aufenthaltsortes einer Mobilstation.

Diese eingefügte Information über das Vorhandensein und die Art des analogen Datendienstes erlaubt nun dem Dienstekontrollpunkt (SCP/HLR) die Einschleifung der notwendigen Interworkingfunktion in die Zielvermittlungsstelle anzustoßen bzw. den weiteren Rufaufbau zu steuern.

Grundsätzlich ist das Verfahren bei allen digitalen Telekommunikationssystemen anwendbar, die auf einer intelligenten Netzwerkarchitektur aufbauen, d.h. bei welchen die Anrufe zu einer besonderen Vermittlungsstelle, z.B. Übergangs-Vermittlungsstelle oder Dienstevermittlungspunkt (SSP: Service Switching Point), aufgebaut werden. Der weitere Verbindungsaufbau wird durch eine Abfrage in einen zentralen Knoten unterbrochen und erst bei Beendigung der Abfrage fortgeführt, sofern die Information, daß es sich um einen analogen Datendienst handelt in dem zentralen Knoten benötigt wird. Bei dem zentralen Knoten kann es sich um einen Dienstekontrollpunkt (SCP: Service Control Point) oder im Falle der Anwendung bei GSM-Mobilfunk um das Heimatregister (HLR) des Teilnehmers handeln.

Das Verfahren kann dadurch optimiert werden, daß die Horcheinrichtung nur aktiv wird, wenn aus der Outband-Signalisierung für den Rufaufbau ersichtlich ist, daß es sich um einen Anruf von einem analogen Endgerät handelt und nicht um einen Anruf von einem digitalen Endgerät.

Weitere Einzelheiten und Merkmale der Erfindung ergeben sich aus der nachfolgenden Beschreibung eines speziellen Ausführungsbeispiels der Erfindung anhand einer Zeichnung

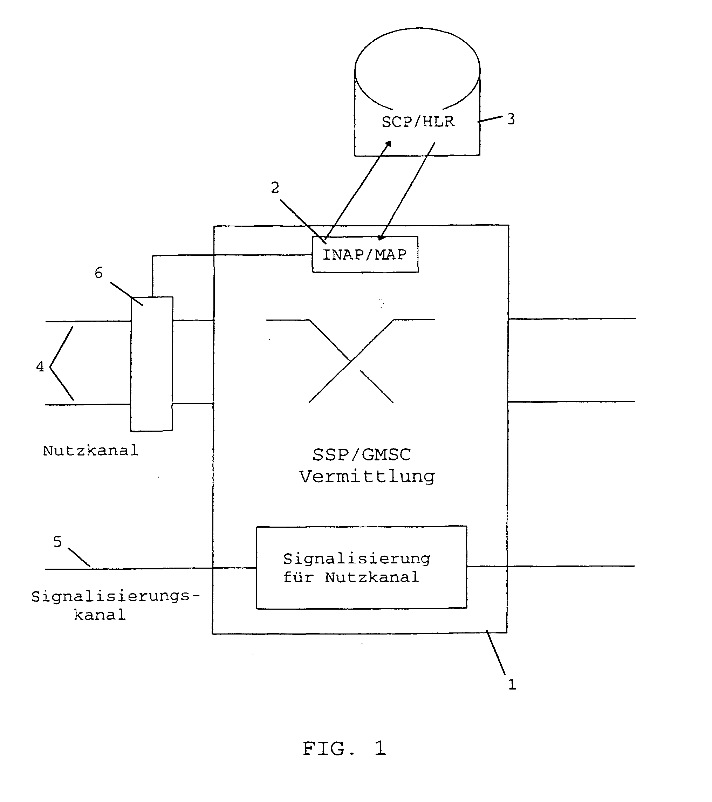

Die Figur zeigt eine Vermittlungsstelle 1 eines intelligenten digitalen Telekommunikationsnetzes an der Nutzkanäle 4 und Signalisierungskanäle 5 eingehen, wobei die ankommenden Informationen die Vermittlungsstelle 1 entsprechend verarbeitet und zugeordnet wieder verlassen.

Die Vermittlungsstelle 1 ist über eine Schnittstelle 2 mit einem zugeordneten Dienstekontrollpunkt 3 (HLR/SCP) verbunden. Die Schnittstelle 2 ist für ein Protokoll zur Kommunikation mit dem Dienstekontrollpunkt ausgelegt. Hierfür wird beispielhaft eine MAP/INAP-Schnittstelle gewählt, es können jedoch auch vergleichbare andere Protokolle Anwendung finden.

Erfindungsgemäß wird nun an oder in der Vermittlungsstelle eine Horcheinrichtung 6 in die Nutzkanäle einschleift, welche mit der Vermittlungsstelle 1 kommuniziert, insbesondere bei jedem Verbindungsaufbau die ankommenden Nutzdaten überwacht und mögliche Inband-Signale, die einen bestimmten Datendienst kennzeichnen, herausfiltert.

Wird ein entsprechendes Inband-Signal, das z.B. von einem analogen Faxgerät kommen kann, detektiert, so wird der reguläre Verbindungsaufbau zur angerufenen Gegenstation unterbrochen und über die MAP/INAP-Schnittstelle 2 eine Abfrage zum Dienstekontrollpunkt 3 gestartet, wobei in die Abfrageinformationen ein Datum eingefügt wird, welches die Art des detektierten Dienstes kennzeichnet. Damit ist dem Dienstekontrollpunkt 3 die Art des zu vermittelten Dienstes bekannt und dieser kann der Vermittlungsstelle 1 gezielte Anweisungen geben wie (Benutzung der Interworkingfunktion) und an welche Gegenstelle die angeforderte Verbindung durchgeschaltet werden soll.

### Zeichnungslegende

- 1: (Dienste-) Vermittlungsstelle
- 2: IN Application Part/ Mobile Application Part
- 3: Dienstekontrollpunkt (SCP/HLR)
- 4: Nutzkanal
- 5: Signalisierungskanal
- 6: Horcheinrichtung

## Patentansprüche

1. Verfahren zur Weglenkung von Signalen in digitalen Telekommunikationssystemen, wobei
bei den Vermittlungsstellen des Telekommunikationssystems die Nutzkanäle vor oder während des Aufbaus einer Verbindung mittels einer geeigneten Horcheinrichtung auf Inband-Signalisierung abgehorcht werden, und im Falle, daß eine Inband-Signalisierung detektiert wurde, der Verbindungsaufbau unterbrochen wird,
wobei die Horcheinrichtung spezielle dienstespezifische Datenprotokolle und Tonsignale erkennt und den entsprechenden Diensten zuordnet,
**dadurch gekennzeichnet,**
**dass** die Horcheinrichtung nur aktiv wird, wenn aus der Outband-Signalisierung für den Verbindungsaufbau ersichtlich ist, daß es sich um einen Verbindungswunsch eines analogen Endgerätes handelt,
**daß** eine Information über die Art des zugehörigen Dienstes an einen Dienstekontrollpunkt weitergeleitet wird, indem in der regulären Abfrage zum intelligenten Dienstekontrollpunkt (SCP/HLR) eine Information zur Kennzeichnung eines analogen Datendienstes eingefügt und übertragen wird, und
**daß** der Dienstekontrollpunkt anhand der erhaltenen Information die Weitervermittlung des Verbindungswunsches steuert.

2. Verfahren nach Anspruch 1, **dadurch gekennzeichnet,**
**daß** durch den Dienstekontrollpunkt die Einschleifung einer Interworkingfunktion in die Vermittlungsstellen gesteuert wird.

3. Einrichtung zur Weglenkung von Signalen in digitalen Telekommunikationssystemen, wobei eine Horcheinrichtung (6) vorgesehen ist, die auf Vermittlungsstellenebene in die Nutzkanäle (4) des Telekommunikationssystems eingeschleift ist, und die Horcheinrichtung (6) über Einrichtungen verfügt, welche dienstespezifische Inband-Signale erkennen,
**dadurch gekennzeichnet,**
**daß** die Horcheinrichtung (6) über eine Schnittstelle (2) mit einem Dienstekontrollpunkt (3) des Telekommunikationsnetzes in Verbindung steht, wobei die Schnittstelle für ein Protokoll zur Kommunikation mit dem Dienstekontrollpunkt ausgelegt ist, wobei die Horcheinrichtung nur aktiviert wird, wenn aus der Outband-Signalisierung für den Verbindungsaufbau ersichtlich ist, daß es sich um einen Verbindungswunsch eines analogen Endgerätes handelt.

## Claims

1. Method for rerouting signals in digital telecommunications systems, wherein in the exchanges in the telecommunications system the basic channels are eavesdropped upon for in-band signalling before or during the set-up of a connection by means of a suitable eavesdropping device and in the event that in-band signalling has been detected call set-up is broken off, wherein the eavesdropping device recognises special service-specific data protocols and audio signals and assigns them to the corresponding services, **characterised in that** the eavesdropping device only becomes active when it is apparent from the out-band signalling for call set-up that this is a connection request from an analogue terminal device, that information about the nature of the associated service is passed on to a service control point **in that** in the regular interrogation of the intelligent service control point (SCP/HLR) information identifying an analogue data service is inserted and transmitted, and that the service control point controls the onward switching of the connection request on the basis of the information received.

2. Method according to claim 1, **characterised in that** by means of the service control point the interconnection of an interworking function in the exchanges is controlled.

3. Device for rerouting signals in digital telecommunications systems, wherein an eavesdropping device (6) is provided which at exchange level is connected into the basic channels (4) of the telecommunications system and the eavesdropping device (6) possesses equipment for recognising service-specific in-band signals, **characterised in that** the eavesdropping device (6) is connected via an interface (2) to a service control point (3) of the telecommunications network, wherein the interface is designed for a protocol for communicating with the service control point, wherein the eavesdropping device is activated only when it is apparent from the out-band signalling for call set-up that this is a connection request from an analogue terminal device.

## Revendications

1. Procédé pour le routage de signaux dans des systèmes de télécommunication numériques, selon lequel au niveau des centraux du système de télécommunication, on recherche la signalisation intrabande des canaux utiles, avant ou pendant l'établissement d'une communication, à l'aide d'un dispositif d'écoute, et au cas où une signalisation intrabande est détectée, l'établissement de la communication est interrompu, le dispositif d'écoute reconnaissant des protocoles de données et des signaux sonores spéciaux propres aux services, et les affectant aux services correspondants,
**caractérisé en ce que** le dispositif d'écoute ne devient actif que s'il apparaît pour l'établissement de la liaison, à partir de la signalisation hors bande, qu'il s'agit d'une intention d'appel d'un terminal analogique,
**en ce qu'**une information concernant le type du service associé est transmise à un point de contrôle de service, une information portant sur l'identification d'un service de données analogique étant insérée et transmise dans l'interrogation régulière auprès du contrôle de service intelligent (SCP/HLR), et
**en ce que** le point de contrôle de service commande à l'aide de l'information reçue l'acheminement de l'intention d'appel.

2. Procédé selon la revendication 1, **caractérisé en ce que** grâce au point de contrôle de service, la mise en boucle d'une fonction d'interfonctionnement dans les centraux est commandée.

3. Dispositif pour le routage de signaux dans des systèmes de télécommunication numériques, un dispositif d'écoute (6) étant mis en boucle au niveau des centraux dans les conduits utiles (4) du système de télécommunication, et le dispositif d'écoute (6) disposant d'appareils qui reconnaissent des signaux intrabande propres aux services,
**caractérisé en ce que** le dispositif d'écoute (6) est relié par une interface (2) à un point de contrôle de service (3) du réseau de télécommunication, l'interface étant conçue pour un protocole en vue de la communication avec le point de contrôle de service et le dispositif d'écoute n'étant activé que s'il apparaît pour l'établissement de la communication, à partir de la signalisation hors bande, qu'il s'agit d'une intention d'appel d'un terminal analogique.
